# EUROPEAN PATENT APPLICATION

(11) **EP 1 137 199 A1**
(43) Date of publication of application: **26.09.2001**
(21) Application number: 00113692.8
(22) Date of filing: 21.03.2000
(51) Int. Cl.: H04B 7/26, H04Q 7/38

(54) **Method of setting up a packet communication in a mobile wireless CDMA system**

(30) Priority: 22.03.1999 US 273508; 24.03.1999 US 275010; 04.05.1999 US 304345
(62) Divisional of application: 00940005.2
(71) Applicant: Golden Bridge Technology, Inc., West Long Branch, NJ 07764 (US)
(72) Inventor: Kanterakis, Emmanuel, North Brunswick, NJ 08902 (US); Parsa, Kourosh, Riverside, CT 06878 (US)
(74) Representative: Rupprecht, Kay, Dipl.-Ing.

(57) **Abstract**

A method of operating a mobile wireless CDMA station to communicate data over a common packet channel in accordance with the invention comprises the steps of receiving a first and second frame-timing signal from a first and second CDMA base station, transmitting a first and second access burst signal comprising a first or second preamble code, respectively, over a CDMA common packet channel, receiving an acknowledgement signal from at least the first base station, selecting the first base station and transmitting a CDMA signal comprising packet data and control information over the common packet channel to the first base station.

## Description

A general object of the invention is an efficient method for packet data transfer on CDMA systems.

Another object of the invention is high data throughput ad low delay, and efficient power control.

The essence of these set of claims focuses on when there are 2 base station, what do you do to choose which one to transmit to. This handoff mechanism can be used in combination with the power control as mentioned in Divisional A 1.

According to the present invention, as embodied and broadly described herein, an improvement to a code-division-multiple-access (CDMA) system employing spread-spectrum modulation, is provided. The CDMA system has a plurality of base stations (BS) and a plurality of remote stations. Each base station has BS-spread-spectrum transmitter and a BS-spread-spectrum receiver. Each of the plurality of remote stations has an RS-spread-spectrum transmitter and an RS-spread-spectrum receiver.

A method of operating a mobile wireless CDMA station to communicate data over a common packet channel in accordance with the invention comprises the steps of receiving a first and second frame-timing signal from a first and second CDMA base station, transmitting a first and second access burst signal comprising a first or second preamble code, respectively, over a CDMA common packet channel, receiving an acknowledgement signal from at least the first base station, selecting the first base station and transmitting a CDMA signal comprising packet data and control information over the common packet channel to the first base station.

A CDMA mobile station according to claim 12 is arranged to operate in that manner.

Furthermore, a method of transferring data for one of a plurality of wireless remote station handsets through one of a plurality of base stations comprises the steps of transmitting at least one frame timing signal from at least one base station spread-spectrum transmitter over at least one broadcast common-synchronization-channel having a common-chip sequence signal, receiving at least one broadcast common-synchronization channel at a remote station spread-spectrum receiver of the handsets and determining timing in response to the at least one frame timing signal, transmitting from the handset at least one access-burst signal comprising a plurality of segments, receiving at least one of the segments in at least one of the base stations, transmitting an acknowledgement from each base station receiving at least one of the segments, receiving one or more acknowledgements at the remote station, selecting one of the base stations, transmitting a signal comprising packet data and power control information from the remote station for the selected base station, and receiving this signal at the selected base station.

Furthermore, a method of providing a packet communication service in a CDMA wireless network comprises the steps of broadcasting a frame-timing signal from a base station over a common synchronization channel modulated with a common chip-sequence signal, selectively authorizing one of a plurality of remote stations to use a common packet channel for packet transmissions to the base station, receiving power control signals followed immediately by data signals from the one authorized remote CDMA station at the CDMA base station, and transmitting power control signals intended for the one authorized remote station from the base station, at a power level based on the received power control signals.

Furthermore, a CDMA wireless base station is arranged to receive over a common packet channel from a remote station a detectable access burst comprising one of the possible coded preamble signals assigned to the base station selected by the remote station, to send a coded acknowledgement signal corresponding to the received coded preamble signal over a control channel, to receive power control signals and data over the common packet channel from the remote station, and to transmit signals intended for the remote station at power levels based on the received power control signals.

Likewise, a CDMA mobile station is arranged to receive a frame-timing signal from a base station over a broadcast common-synchronization channel having a common chip-sequence signal, to determine frame timing therefrom, to transmit an access burst signal over a common packet channel in a selected time slot, to receive an acknowledgement signal from the base station, to receive power control signals and data from the base station to transmit power control signals to the base station at power levels based on the received power control signals, and to transmit packet data to the base station at power levels based on the received power control signals.

Finally, a method of transferring data for one of a plurality of wireless remote station handsets through a base station in accordance with the invention comprises the steps of transmitting a frame-timing signal from a base station spread-spectrum transmitter over a broadcast common-synchronization channel having a common chip-sequence signal, receiving the broadcast common-synchronization channel comprising a frame timing signal at the one remote station handset, determining frame timing at the handset, transmitting one or more segments of an access-burst signal from the handset, receiving at least one segment of the access-burst signal at the base station, transmitting an acknowledgement and a spread-spectrum signal comprising power control information from the base station, receiving the acknowledgement and the power control information at the remote station, transmitting the signal comprising power control information and packet data from the remote station, receiving that signal at the base station, forwarding the received data from the base station to another network element and transmitting from the base station additional signals intended for the remote station at power levels determined at least in part in response to the power control information received at the base station.

## Claims

1. A method of operating a mobile wireless code-division-multiple-access (CDMA) station to communicate data over a Common Packet Channel of a CDMA wireless network, the method comprising the steps of:
receiving a first frame-timing signal from a first CDMA base station over a broadcast synchronization channel;
receiving a second frame-timing signal from a second CDMA base station over a broadcast synchronization channel;
transmitting a first access burst signal over a CDMA Common Packet Channel, the first access burst signal comprising a first preamble code in a time slot selected from a plurality of time slots having predefined relationships to the first frame timing signal;
transmitting a second access burst signal over the CDMA Common Packet Channel, the second access burst signal comprising a second preamble code in a time slot selected from a plurality of time slots having predefined relationships to the second frame timing signal;
receiving an acknowledgement signal from at least the first CDMA base station;
selecting the first CDMA base station in response to the receiving of an acknowledgement signal; and
transmitting a CDMA signal comprising packet data and
control information over the CDMA Common Packet Channel to the first CDMA base station.

2. A method as in claim 1, wherein upon selecting the first CDMA base station, the method further comprises:
receiving a plurality of power control signals from the first CDMA base station; and
transmitting a plurality of power control signals to the first CDMA base station.

3. A method as in claim 2, wherein the step of transmitting a CDMA signal comprising packet data and control information comprises transmitting at a rate determined in part in response to the received power control signals from the first CDMA base station.

4. A method as in claim 1, wherein:
the step of receiving an acknowledgement signal comprises receiving the acknowledgement signal from the first CDMA base and receiving an acknowledgement signal from the second CDMA base station; and
the first CDMA base station is selected in the selecting step because the wireless mobile CDMA station received the acknowledgement signal from the first CDMA base station before receiving the acknowledgement signal from the second CDMA base station.

5. A method as in claim 4, wherein:
the step of transmitting the first access burst signal comprises transmitting a sequence of first segments at increasing power levels, each first segment comprising the first preamble code; and
the step of transmitting the second access burst signal comprises transmitting a sequence of second segments at increasing power levels, each second segment comprising the second preamble code.

6. A method as in claim 1, wherein:
the step of receiving an acknowledgement signal comprises receiving the acknowledgement signal from the first CDMA base station and receiving an acknowledgement signal from the second CDMA base station; and
the first CDMA base station is selected in the step of selecting in response to a predetermined relationship of the received acknowledgement signals.

7. A method as in claim 6, wherein the predetermined relationship is that the acknowledgement signal from the first CDMA base station is received at a higher power level that the acknowledgement signal from the second CDMA base station.

8. A method as in claim 6, further comprising analyzing probabilities for errors with respect to the first and second base stations in response to the received acknowledgement signals, wherein the predetermined relationship is that the probability for errors is lower for the first CDMA base station.

9. A method as in claim 6, wherein:
the step of transmitting the first access burst signal comprises transmitting a sequence of first segments at increasing power levels, each first segment comprising the first preamble code; and
the step of transmitting the second access burst signal comprises transmitting a sequence of second segments at increasing power levels, each second segment comprising the second preamble code.

10. A method as in claim 1, wherein:
the step of receiving a first frame-timing signal comprises receiving the first frame timing signal over a first broadcast synchronization channel having a first common chip-sequence signal; and
the step of receiving a second frame-timing signal comprises receiving the second frame timing signal over a second broadcast synchronization channel having a second common chip-sequence signal.

11. A method as in claim 1, wherein the step of transmitting the CDMA signal comprising packet data comprises:
transmitting a selected collision detection code over the Common Packet Channel;
receiving a corresponding collision detection code from the first CDMA base station; and
initiating the transmission of the CDMA signal comprising packet data over the Common Packet Channel in response to the receipt of the corresponding collision detection code.

12. A code-division-multiple-access (CDMA) wireless mobile station, comprising:
a CDMA transmitter;
a CDMA receiver; and
a controller coupled to the CDMA receiver for responding to certain received signals and coupled for controlling the CDMA transmitter, such that in operation the wireless mobile station:
receives frame-timing signals for first and second CDMA base stations over at least one broadcast common-synchronization channel;
determines first and second frame timings from the received frame-timing signals;
transmits a first access burst signal comprising a first preamble code associated with the first CDMA base station over the Common Packet Channel at a time determined from the first frame timing signal;
transmits a second access burst signal comprising a second preamble code associated with the second CDMA base station over the Common Packet Channel at a time determined from the second frame timing signal;
receives an acknowledgement signal from at least the first CDMA base station;
selects the first CDMA base station in response to the receipt of an acknowledgement signal; and
transmits a CDMA signal comprising packet data and control information over the Common Packet Channel to the first CDMA base station.

13. A CDMA wireless mobile station as in claim 12, wherein the CDMA receiver receives the first timing signal over a first synchronization channel having a first common chip sequence, and the CDMA receiver receives the second timing signal over a second synchronization channel having a second common chip sequence.

14. A CDMA wireless mobile station as in claim 12, wherein the controller selects the first CDMA base station because the CDMA receiver receives only the acknowledgement signal from the first CDMA base station.

15. A CDMA wireless mobile station as in claim 12, wherein the controller selects the first CDMA base station because the CDMA receiver first receives the acknowledgement signal from the first CDMA base station before receiving an acknowledgement signal if any from the second CDMA base station.

16. A CDMA wireless mobile station as in claim 12, wherein:
the CDMA receiver receives the acknowledgement signal from the first CDMA base station and receives an acknowledgement signal from the second CDMA base station; and
the controller selects the first CDMA base station based on predetermined criteria with regard to the acknowledgement signals.

17. A CDMA wireless mobile station as in claim 16, wherein the controller selects the first CDMA base station because the acknowledgement signal from the first CDMA base station is received at a higher power level that the acknowledgement signal from the second CDMA base station.

18. A CDMA wireless mobile station as in claim 16, wherein the controller selects the first CDMA base station because analysis of the acknowledgement signals from the first and second CDMA base stations indicates a lower probability of errors for communications with the first CDMA base station.

19. A CDMA wireless mobile station as in claim 12, wherein the controller causes the CDMA transmitter to:
send the first access burst signal comprising a sequence of first segments transmitted at increasing power levels, each first segment comprising the first preamble code; and
send the second access burst signal comprising a sequence of second segments transmitted at increasing power levels, each second segment comprising the second preamble code.

20. A CDMA wireless mobile station as in claim 12, wherein the controller further causes the station to receive and respond to power control signals from the first CDMA base station and to transmit power control signals to the first CDMA base station.

21. A CDMA wireless mobile station as in claim 12, wherein the step of transmitting packet data comprises transmitting at a power-level determined in part from the received power control signals received from the first CDMA base station.

22. A CDMA wireless mobile station as in claim 12, wherein the controller causes the CDMA transmitter to transmit a selected collision detection code following receipt of the acknowledgement signal from the first CDMA base station and to initiate the transmission of the packet data in response to a subsequent receipt of a collision detection code from the first CDMA base station that corresponds to the selected collision detection code.

23. A method of transferring data for one of a plurality of wireless remote station (RS) handsets through one of a plurality base stations (BSs) of a wireless telecommunication network, each base station comprising a BS-spread-spectrum transmitter and a BS-spread-spectrum receiver, the method comprising the steps of:
transmitting at least one frame timing signal from at least one BS-spread-spectrum transmitter over at least one broadcast common-synchronization channel having a common chip-sequence signal;
receiving the at least one broadcast common-synchronization channel at an RS-spread-spectrum receiver of the one RS handset and determining timing in response to the at least one frame timing signal;
transmitting from an RS-spread-spectrum transmitter of the one RS handset at least one access-burst signal comprising a plurality of segments containing a preamble code, in a predetermined timing relationship to the determined timing;
receiving at least one of the segments at the BS spread-spectrum receiver of at least one of the base stations;
transmitting an acknowledgment from a BS-spread-spectrum transmitter of each base station receiving at least one of the segments;
receiving one or more acknowledgments at said RS-spread-spectrum receiver;
selecting one of the base stations based on the received one or more acknowledgements;
transmitting a spread-spectrum signal comprising packet data and power control information from said RS-spread-spectrum transmitter for the selected base station; and
receiving the spread-spectrum signal comprising packet data and power control information at the BS-spread-spectrum receiver of the selected base station.

24. A method as in claim 23, wherein the step of transmitting at least one access-burst signal comprises transmitting segments at respective power levels, wherein each transmitted segment contains a preamble common to two or more of the base stations.

25. A method as in claim 24, wherein:
the step of receiving one or more acknowledgments comprises receiving a first acknowledgement from a first one of the base stations and receiving a second acknowledgement from a second one of the base stations; and
the step of selecting one of the base stations comprises analyzing the reception of the first and second acknowledgements to determine based on predetermined criteria which base station communication is best.

26. A method as in claim 25, wherein the predetermined criteria relates to relative power levels of the received acknowledgements.

27. A method as in claim 23, wherein:
the step of transmitting at least one access-burst signal comprises: transmitting a first plurality of segments containing a preamble associated with a first one of the base stations, and transmitting a second plurality of segments containing a second preamble associated with a second one of the base stations;
the step of receiving at least one of the segments comprises receiving at least one of the first plurality of segments at the BS-spread-Spectrum receiver of the first base station, and receiving at least one of the second plurality of segments at the BS-spread-spectrum receiver of the second base station; and
the step of transmitting an acknowledgment comprises transmitting a first acknowledgement corresponding to the first preamble from the BS-spread-spectrum transmitter of the first base station, and transmitting a second acknowledgement corresponding to the second preamble from the BS-spread-spectrum transmitter of the second base station.

28. A method as in claim 27, wherein the step of selecting one of the base stations comprises analyzing the reception of the first and second acknowledgements to determine based on predetermined criteria which base station communication is best.

29. A method as in claim 28, wherein the predetermined criteria relates to relative power levels of the received acknowledgements.

30. A method as in claim 28, wherein the predetermined criteria relates to which of the acknowledgements was received first at the RS-spread-spectrum receiver of the one RS handset.

31. A method as in claim 28, wherein the predetermined criteria relates to relative probabilities of errors in communication with respective base stations as determined from the received acknowledgements.

32. A method as in claim 25, further comprising:
transmitting at least power control information for the one RS handset from the BS-spread-spectrum transmitter, at a power level determined in response to the power control information received from the one RS handset;
receiving the power control information transmitted from the BS-spread transmitter in the one RS-spread -spectrum receiver; and
transmitting a spread-spectrum signal comprising packet data or power control information from the RS-spread spectrum transmitter, at a power level determined in response to the power control information received in the RS-spread spectrum receiver.

33. A method as in claim 23, further comprising:
transmitting a selected one of a plurality of collision-detection (CD) codes from said RS-spread-spectrum transmitter, upon selection of one of the base stations;
if the BS-spread-spectrum receiver of the selected base station detects the selected CD code, transmitting a selected one of a plurality of BS-CD codes from said BS-spread-spectrum transmitter of the selected base station; and
if the RS-spread-spectrum receiver detects the selected BS-CD code, initiating the step of transmitting the spread spectrum signal comprising packet data and power control information.

34. A method of providing a packet communication service in a code-division-multiple-access (CDMA) wireless network, comprising:
broadcasting a frame-timing signal from a CDMA base station of the network, over a common synchronization channel modulated with a common chip-sequence signal;
selectively authorizing one of a plurality of remote CDMA stations to use a Common Packet Channel for packet transmissions to the CDMA base station, on a slotted-aloha basis, in a predetermined relationship to the frame-timing signal;
receiving power control signals followed immediately by data signals, over the Common Packet Channel, from the one authorized remote CDMA station, at the CDMA base station; and
transmitting power control signals intended for the one authorized remote CDMA station, from the CDMA base station, at a power level based on the received power control signals.

35. A method as in claim 34, further comprising transmitting additional signals intended for the one authorized remote CDMA station at power levels based on the received power control signals.

36. A code-division-multiple-access (CDMA) wireless base station, the base station being assigned a set of possible coded preamble signals for use in CDMA communications, the CDMA base station comprising:
a CDMA transmitter;
a CDMA receiver; and
a controller coupled to the CDMA receiver for responding to certain received signals and coupled for control of the CDMA transmitter, such that in operation the CDMA base station:
receives over a Common Packet Channel from a remote station a detectable access burst comprising one of the possible coded preamble signals assigned to the base station selected by the remote station;
sends a coded acknowledgement signal over a control channel, the coded acknowledgement signal corresponding to the received coded preamble signal;
receives power control signals and data, over the Common Packet Channel, from the remote station after transmission of the acknowledgement signal; and
transmits signals intended for the remote station at power levels based on the received power control signals.

37. A CDMA base station as in claim 36, wherein:
the reception of data over the Common Packet Channel from the remote station comprises receiving a coded collision detection signal;
upon receipt of the coded collision detection signal, the controller causes the CDMA base station to transmit back over the control channel a corresponding coded collision detection signal; and
the reception of power control and data signals over the Common Packet Channel from the remote station further comprises receiving the power control and data signals after transmission of the corresponding coded collision detection signal.

38. A CDMA base station as in claim 36, wherein the controller causes the CDMA transmitter to broadcast a frame-timing signal over a common synchronization channel modulated with a common chip-sequence signal.

39. A CDMA base station as in claim 38, wherein the CDMA receiver receives the access burst in one of a plurality of access slots defined in relation to the frame-timing signal.

40. A CDMA base station as in claim 36, wherein:
the reception of a detectable access burst comprises receiving one or more coded preamble signals that may be transmitted at sequentially increasing discrete power levels; and
the controller causes the CDMA transmitter to transmit the acknowledgement signal in response to a first coded preamble signal that is received at an adequate power level.

41. A code-division-multiple-access (CDMA) wireless mobile station, comprising:
a CDMA transmitter;
a CDMA receiver; and
a controller coupled to the CDMA receiver for responding to certain received signals and coupled for controlling the CDMA transmitter, such that in operation the wireless mobile station:
receives a frame-timing signal from a CDMA base station over a broadcast common-synchronization channel having a common chip-sequence signal;
determines frame timing from the received frame-timing signal;
transmits an access burst signal over a Common Packet Channel, in a time slot selected from a plurality of time slots having predefined relationships to the determined frame timing;
receives an acknowledgement signal corresponding to the access burst signal, from the CDMA base station;
receives power control signals and data from the CDMA base station;
transmits power control signals to the CDMA base station over the Common Packet Channel at power levels based on the received power control signals, following receipt of the acknowledgement signal; and
transmits packet data to the CDMA base station over the Common Packet Channel at power levels based on the received power control signals.

42. A CDMA wireless mobile station as in claim 41, wherein the controller causes the CDMA transmitter to transmit the power control signals to the CDMA base station immediately prior to the transmission of the packet data.

43. A CDMA wireless mobile station as in claim 41, wherein the controller causes the CDMA transmitter to transmit a selected collision detection code following receipt of the acknowledgement signal and initiates transmission of at least the packet data in response to receipt of a collision detection code from the CDMA base station that corresponds to the selected collision detection code.

44. A CDMA wireless mobile station as in claim 43, wherein the controller causes the CDMA transmitter to transmit the power control signals to the CDMA base station following receipt of the corresponding collision detection code from the CDMA base station and subsequently causes the CDMA transmitter to transmit the packet data.

45. A method of transferring data for one a plurality of wireless remote station (RS) handsets through a base station (BS) of a wireless telecommunication network, the base station comprising a BS-spread-spectrum transmitter and a BS-spread-spectrum receiver, the method comprising the steps of:
transmitting a frame-timing signal from said BS-spread-spectrum transmitter over a broadcast common-synchronization channel having a common chip-sequence signal;
receiving the broadcast common-synchronization channel comprising a frame timing signal at an RS-spread-spectrum receiver of the one RS handset;
determining frame timing at an RS-spread-spectrum receiver of the one RS handset from the received frame-timing signal;
transmitting one or more segments of an access-burst signal from an RS-spread-spectrum transmitter of the one RS handset, wherein timing of the one or more segments is based on the determined frame timing;
receiving at least one segment of the access-burst signal at said BS spread-spectrum receiver;
transmitting an acknowledgment from said BS-spread-spectrum transmitter, in response to the receipt of the at least one segment of the access-burst signal;
transmitting a spread-spectrum signal comprising power control information from said BS-spread-spectrum transmitter, after transmitting the acknowledgment; receiving the acknowledgment and the power control information at said RS-spread-spectrum receiver; transmitting a spread-spectrum signal comprising power control information and packet data from said RS-spread-spectrum transmitter, in response to the receipt of the acknowledgment and at a power level responsive to the received power control information;
receiving the spread-spectrum signal comprising power control information and packet data from said RS-spread-spectrum transmitter, at said BS-spread-spectrum receiver; forwarding the received data from said base station to another network element; and
transmitting from said BS-spread-spectrum transmitter additional signals intended for said RS-spread-spectrum receiver at power levels determined at least in part in response to the power control information received at said BS-spread-spectrum receiver.

46. The method as set forth in claim 45, wherein:
the step of transmitting the access-burst signal comprises transmitting a plurality of segments at a plurality of respective power levels; and
the step of receiving at least one segment comprises receiving at least one segment at a detectable power level.

47. The method as set forth in claim 46, wherein the step of transmitting the access-burst signal comprises transmitting the segments at sequentially increasing power levels.

48. The method as set forth in claim 45, wherein each segment comprises a selected one of a plurality of preamble codes, and the acknowledgement comprises a coded signal corresponding to the selected preamble code.

49. The method as set forth in claim 45, further comprising:
transmitting a selected one of a plurality of collision-detection (CD) codes by said RS-spread-spectrum transmitter, in response to receipt of the acknowledgment; if the BS-spread-spectrum receiver detects the selected CD code from the RS-spread-spectrum transmitter, transmitting a corresponding BS-CD code from said BS-spread-spectrum transmitter; and
if the RS-spread-spectrum receiver detects the corresponding BS-CD code, transmitting at least data to said base station, from said RS-spread-spectrum transmitter.

50. The method as set forth in claim 49, wherein the step of transmitting at least data comprises transmitting the power control signals followed by the data, to said base station, from said RS-spread-spectrum transmitter.
